# EUROPEAN PATENT APPLICATION

(11) **EP 2 796 413 A2**
(43) Date of publication of application: **29.10.2014**
(21) Application number: 14161703.5
(22) Date of filing: 26.03.2014
(51) Int. Cl.: C01G 9/08, C09K 11/58, H05B 33/14

(54) **Method for fabricating metal-ion-doped zinc sulfide nanoparticle and method for generating a warm white light by using the metal-ion-doped zinc sulfide nanoparticle**

(30) Priority: 03.04.2013 TW 102112135
(71) Applicant: National Taiwan University, Taipei 10617 (TW)
(72) Inventor: Lin, Ching-Fuh, 10617 Taipei (TW); Shen, Pin-Chun, 10617 Taipei (TW)
(74) Representative: Karakatsanis, Georgios

(57) **Abstract**

The present invention relates to a method for fabricating metal-ion-doped zinc sulfide nanoparticle and a method for generating a warm white light by using the metal-ion-doped zinc sulfide nanoparticle, and particularly relates to a method for fabricating manganese-doped zinc sulfide nanoparticle, which can emits a red light having a wavelength of 600 nm-650 nm, and a method for generating a warm white light by using the manganese-doped zinc sulfide nanoparticle to form a warm white light emission phosphor film.

## Description

### CROSS REFERENCE

This application claims priority from Taiwan Patent Application No. 102112135, filed April 3, 2013, the content of which are hereby incorporated by reference in their entirety for all purposes.

### BACKGROUND OF THE INVENTION

### 1. Field of the Invention

The present invention relates to a method for fabricating metal-ion-doped zinc sulfide nanoparticle and a method for generating a warm white light by using the metal-ion-doped zinc sulfide nanoparticle, and particularly relates to a method for fabricating manganese-doped zinc sulfide nanoparticle, which can emits a red light having a wavelength of 600 nm-650 nm, and a method for generating a warm white light by using the manganese-doped zinc sulfide nanoparticle to form a warm white light emission phosphor film.

### 2. Description of the Prior Art

Now, the white LED is fabricated by following two methods:(1) A blue LED is used to emit a blue light. The yellow phosphor, such as YAG(Y₃Al₅O₂), coated on a epoxy resin is excited by portion of the blue light to emit a yellow light. Another portion of the blue is mixed with the yellow light to emit a white light. (2) A multi-chip LED or RGB LED is formed by combining a red LED, a green LED and a blue LED. The multi-chip LED (or RGB LED) emits white light by mixing the red light emitted from the red LED, the green light emitted from the green LED, and the blue light emitted from the blue LED.

However, all of foregoing methods have shortcomings. In the method (1), the blue light must account for large proportion of the white light generated by the white LED fabricate by the method (1). Therefore, after the yellow phosphor is excited by the blue light to emit a yellow light, there is still a remained portion of the blue light to mix with the yellow light emitted from the yellow phosphor for generating the white light. Accordingly, the white light generated by the white LED fabricate by the method (1) is a cool white light which has high color temperature and is bluish. The white light have low color rendering index (CRI) because the emission spectrum of the white light lacks for the emission spectrum of the red light. If human exposes under the cool white light having high color temperature, the Melatonon secretion of humain body at night will be inhibited. It results in insomnia, increasing risk of cancer, and so on. Therefore, obviously, the white light generated by the white LED fabricate by the method (1) is not suitable for daily illumination.

In the method (2), it has a need of different driving circuits to drive different LED chips because the RGB LED is composed of different LED chips. The process of fabricating the RGB LED becomes complicated due to these driving circuits, and the multi-chip LED (or RGB LED) has bad heat dissipation. The white light generate by the RGB LED is non-uniform because the luminous efficiency and the thermal stability of different LED chips in the RGB LED are different from each other. Therefore, the method (2) has disadvantages of complicated fabricating process, bad heat dissipation, and non-uniform white light.

Besides, these two methods have a need of using phosphors. Most raw materials of the phosphor are rare earth elements. The yield of rare earth elements is few and it is difficult to mine the rare earth elements. Thus, the prices of the rare earth elements are high and still getting rising, and the costs of the phosphor and the white LED are getting increasing. Furthermore, the surface vegetation of the earth is broken when rare earth elements are mined. It results in a serious environmental disruption. The phosphor is usually fabricated by solid-state sintering. In the solid-state sintering process, the raw material of the phosphor need to be sintered at the temperature over 1000°C for a long period of time, and thus the cost of fabricating the phosphor is increased. Therefore, these two methods have disadvantages of increasing cost and environmental disruption caused by employing the rare earth elements and the solid-state sintering.

Therefore, it has a need of a method for generating a white light. In this method, other material, which is cheap, easy to be obtained, and environmentally friendly, is used instead of the rare earth elements for generating a warm white light which is suitable for daily illumination and has high color rendering index and low color temperature.

### SUMMARY OF THE INVENTION

In view of the foregoing, one object of the present invention is to provide a method for fabricating metal-ion-doped zinc sulfide nanoparticle. In this method, material, which is cheap, easy to be obtained, and environmentally friendly, is used to form the metal-ion-doped zinc sulfide nanoparticle, and the process having advantages of simple process, simple processing conditions (or requirements) and low cost is applied to form the metal-ion-doped zinc sulfide nanoparticle. The metal-ion-doped zinc sulfide nanoparticle can be excited to emit a red light. The metal-ion-doped zinc sulfide nanoparticle is used instead of the conventional red phosphor which is made of the rare earth elements and formed by the convention solid-state sintering having a need of high cost, long processing time, and high temperature. Therefore, the cost of fabricating the red phosphor can be decreased and the process for fabricating the red phosphor can be simplified. Furthermore, the metal-ion-doped zinc sulfide nanoparticle fabricated by this method can be applied to fabricate a warm white light emission phosphor film which can be excited to emit a warm white light. Therefore, the coat of producing a warm white light emission phosphor film can be decreased and the process of producing a warm white light emission phosphor film be simplifying by using this metal-ion-doped zinc sulfide nanoparticle.

Another object of the present invention is to provide a method for fabricating a warm white light emission phosphor film. In this method, a blue light organic material, zinc oxide nano structure, and metal-ion-doped zinc sulfide nanoparticles are used to fabricate an organic-inorganic composite thin film with the process having advantages of simple process, simple processing conditions (or requirements) and low cost. Therefore, it has no need of the rare earth elements which are expensive, difficult to be obtained, and environmentally unfriendly. The organic-inorganic composite thin film can be excited to simultaneously generate or emit a blue light, a green light, and a red light, and the blue light, the green light, and the red light are mixed with each other to form a warm white light which is suitable for daily illumination and has a good color rendering index (CRI) and a low color temperature. Therefore, the organic-inorganic composite thin film can be used as a warm white light emission phosphor film, and the color temperature and color rendering index (CRI) of the white light can be controlled by this method and the warm white light emission phosphor film. Furthermore, the warm white light emission phosphor film fabricated by this method can be applied to generate a warm white light, which is suitable for daily illumination, has a good color rendering index (CRI) and a low color temperature, and does not hurt humain body.

Still another object of the present invention is to provide a method for generating a warm white light. In this method, a blue light organic material, zinc oxide nano structure, and metal-ion-doped zinc sulfide nanoparticles are used to fabricate an organic-inorganic composite thin film with the process having advantages of simple process, simple processing conditions (or requirements) and low cost. Therefore, it has no need of the rare earth elements which are expensive, difficult to be obtained, and environmentally unfriendly. The organic-inorganic composite thin film is used as a warm white light emission phosphor film for generating a warm white light. The organic-inorganic composite thin film is excited to generate or emit a blue light, a green light, and a red light simultaneously, and the blue light, the green light, and the red light are mixed with each other to form a warm white light which is suitable for daily illumination, unhurtful to humain body, and has a good color rendering index (CRI) and a low color temperature. Furthermore, the color temperature and color rendering index (CRI) of the white light can be controlled by this method and the warm white light emission phosphor film.

According to one of the objects above, a method for fabricating metal-ion-doped zinc sulfide nanoparticle is disclosed herein, and particularly, a method for fabricating manganese-doped zinc sulfide nanoparticle, which can emits a red light having a wavelength of 600 nm-650 nm, is disclosed herein. The method comprises following steps: (1) preparing a first solution containing a zinc ion and a metal ion capable of being used as a luminous center of a red light; (2) preparing a second solution containing a sulfur ion; (3) mixing the first solution with the second solution uniformly to prepare a mixed solution and growing a metal-ion-doped zinc sulfide nanoparticle in the mixed solution; and (4) performing a heat treatment to the metal-ion-doped zinc sulfide nanoparticle for removing solvent from the metal-ion-doped zinc sulfide nanoparticle. In this method, material, which is cheap, easy to be obtained, and environmentally friendly, is used to form the metal-ion-doped zinc sulfide nanoparticle, and the process having advantages of simple process, simple processing conditions (or requirements) and low cost is applied to form the metal-ion-doped zinc sulfide nanoparticle. The metal-ion-doped zinc sulfide nanoparticle can be excited to emit a red light. The metal-ion-doped zinc sulfide nanoparticle is used instead of the conventional red phosphor which is made of the rare earth elements and formed by the convention solid-state sintering having a need of high cost, long processing time, and high temperature. Therefore, the cost of fabricating the red phosphor can be decreased and the process for fabricating the red phosphor can be simplified.

According to another of the objects above, a method for fabricating a warm white light emission phosphor film is disclosed herein. The method comprises following steps: (1) providing a substrate; (2) preparing an organic material solution; (3) adding a zinc oxide nano structure into the organic material solution; (4) adding a metal-ion-doped zinc sulfide nanoparticle into the organic material solution; (5) coating the organic material solution on the substrate; and (6) annealing the substrate having the organic material solution coated thereon for forming an organic-inorganic composite thin film wherein the organic-inorganic composite thin film is used as a warm white light emission phosphor film. In this method, a blue light organic material, zinc oxide nano structure, and metal-ion-doped zinc sulfide nanoparticles are used to fabricate an organic-inorganic composite thin film with the process having advantages of simple process, simple processing conditions (or requirements) and low cost, and the organic-inorganic composite thin film is used as a warm white light emission phosphor film for generating a warm white light. Therefore, it has no need of the rare earth elements which are expensive, difficult to be obtained, and environmentally unfriendly.

According to still another one of the objects above, a method for generating a warm white light is disclosed herein. The method comprises following steps: (1) providing a substrate; (2) preparing an organic material solution; (3) adding a zinc oxide nano structure into the organic material solution; (4) adding a metal-ion-doped zinc sulfide nanoparticle into the organic material solution; (5) coating the organic material solution on the substrate; and (6) annealing the substrate having the organic material solution coated thereon for forming an organic-inorganic composite thin film wherein the organic-inorganic composite thin film is used as a warm white light emission phosphor film, and then illiminating the warm white light emission phosphor film with a UV light for generating a warm white light. The warm white light emission phosphor film can generate or emit a warm white light which is suitable for daily illumination, unhurtful to humain body, and has a good color rendering index (CRI) and a low color temperature. Furthermore, the color temperature and color rendering index (CRI) of the white light can be controlled by this method and the warm white light emission phosphor film.

Therefore, the present invention provides a method for fabricating metal-ion-doped zinc sulfide nanoparticle, a method for fabricating a warm white light emission phosphor film, and a method for generating a warm white light. In these methods, material, which is cheap, easy to be obtained, and environmentally friendly, is used to form the metal-ion-doped zinc sulfide nanoparticle, and the process having advantages of simple process, simple processing conditions (or requirements) and low cost is applied to form the metal-ion-doped zinc sulfide nanoparticle. The metal-ion-doped zinc sulfide nanoparticle can be excited to emit a red light. The metal-ion-doped zinc sulfide nanoparticle is used instead of the conventional red phosphor which is made of the rare earth elements and formed by the convention solid-state sintering having a need of high cost, long processing time, and high temperature. Therefore, the cost of fabricating the red phosphor can be decreased and the process for fabricating the red phosphor can be simplified. Furthermore, the metal-ion-doped zinc sulfide nanoparticle, a blue light organic material, and a zinc oxide nano structure are used to fabricate an organic-inorganic composite thin film. This organic-inorganic composite thin film is used as a warm white light emission phosphor film. Furthermore, by illumination of a UV light, the warm white light emission phosphor film can be excited to simultaneously generate or emit a blue light, a green light, and a red light, and a warm white light, which is suitable for daily illumination, unhurtful to human body, and has a good color rendering index (CRI) and a low color temperature, is formed by mixing the blue light, the green light, and the red light together. Besides, the color temperature and color rendering index (CRI) of the white light can be controlled by this method and the warm white light emission phosphor film.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein:
FIG. 1 is a flowchart illustrating a fabricating a method for fabricating metal-ion-doped zinc sulfide nanoparticle in accordance with an embodiment of the present invention.
FIG. 2 is a flowchart illustrating a method for fabricating a warm white light emission phosphor film and a method for generating a warm white light in accordance with another embodiment of the present invention.

### DESCRIPTION OF THE PREFERRED EMBODIMENT

The detailed description of the present invention will be discussed in the following embodiments, which are not intended to limit the scope of the present invention, but can be adapted for other applications. While drawings are illustrated in details, it is appreciated that the quantity of the disclosed components may be greater or less than that disclosed, except expressly restricting the amount of the components. Although specific embodiments have been illustrated and described, it will be appreciated by those skilled in the art that various modifications may be made without departing from the scope of the present invention, which is intended to be limited solely by the appended claims.

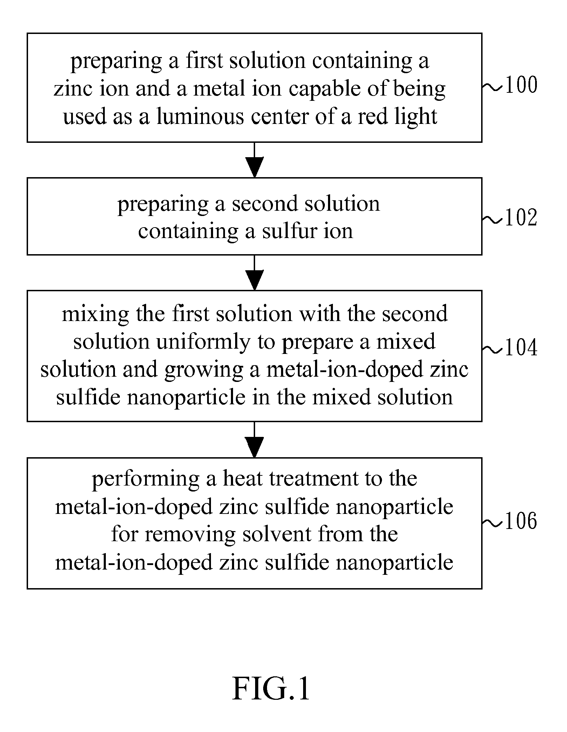

FIG. 1 is a flowchart illustrating a fabricating a method for fabricating metal-ion-doped zinc sulfide nanoparticle in accordance with an embodiment of the present invention. Referring to FIG. 1, first, a chemical agent containing zinc and a chemical agent containing a metal capable of being used as a luminous center of a red light are dissolved in a solvent for preparing a first solution containing a zinc ion and a metal ion capable of being used as a luminous center of a red light (step 100). In the step 100, the chemical agent containing zinc is a chemical agent capable of dissociating zinc ions by dissolution (for example be dissolved in a solvent), such as zinc nitride, zinc acetate, zinc chloride, or other chemical agent capable of dissociating zinc ions by dissolution. The chemical agent containing zinc is used as a zinc ion source of the first solution. The chemical agent containing a metal capable of being used as a luminous center of a red light is a chemical agent capable of dissociating metal ions by dissolution (for example be dissolved in a solvent), such as metal nitride, metal acetate, metal chloride, or other chemical agent capable of dissociating metal ions which can be used as a luminous center of a red light by dissolution (for example be dissolved in a solvent). The chemical agent containing a metal capable of being used as a luminous center of a red light is used as a metal ion source, which can be used as a luminous center of a red light, of the first solution. Mole ratio of the metal ion and the zinc ion in the first solution is 0.01% to 30%.

The metal ion maybe a manganese ion, iron ion, cobalt ion, copper ion, other metal ion capable of be used as a luminous center of a red light. The metal ion is preferably a manganese ion. When manganese ions are used as a luminous center of a red light in this method (or step), the chemical agent containing a metal capable of being used as a luminous center of a red light is a chemical agent containing manganese. The chemical agent containing manganese is a chemical agent capable of dissociating manganese ions by dissolution (for example be dissolved in a solvent), such as manganese nitride, manganese acetate, manganese chloride, or other chemical agent capable of dissociating manganese ions which can be used as a luminous center of a red light by dissolution (for example be dissolved in a solvent). The chemical agent containing manganese is used as a manganese ion source, which can be used as a luminous center of a red light, of the first solution. Mole ratio of the manganese ion and the zinc ion in the first solution is 0.01% to 30%. In the step 100, the solvent maybe water, deionized water, methanol, ethanol, 2 methyloxyethanol, or other solvent capable of dissolving the chemical agent containing zinc and the chemical agent containing a metal capable of being used as a luminous center of a red light.

After, a chemical agent containing sulfur is dissolved in a solvent for preparing a second solution containing a sulfur ion (step 102). In the step 102, the chemical agent containing sulfur is a chemical agent capable of dissociating sulfur ions by dissolution (for example be dissolved in a solvent), such as odium sulfide, thiourea, dimethyl sulfoxide, or other chemical agent capable of dissociating sulfur ions by dissolution. The chemical agent containing sulfur is used as a sulfur ion source of the first solution. In the step 102, the solvent maybe water, deionized water, methanol, ethanol, 2 methyloxyethanol, or other solvent capable of dissolving the chemical agent containing sulfur.

After, the first solution, which contains a zinc ion and a metal ion capable of being used as a luminous center of a red light, and the second solution, which contains containing a sulfur ion, are mixed with each other for preparing a mixed solution, and then, the mixed solution is put (or stood) at 15°C to 200 °C for 20 minutes to 48 hours or shaken by a ultrasonic vibrator (or cleaner) at 15°C to 200°C for 20 minutes to 48 hours for growing metal-ion-doped zinc sulfide nanoparticles in the mixed solution (step 104). The metal ion in the metal-ion-doped zinc sulfide nanoparticle is used as a luminous center of a red light. In the step 104, the mixed solution also can be put (or stood) at room temperature for 20 minutes to 48 hours or shaken by a ultrasonic vibrator (or cleaner) at room temperature for 20 minutes to 48 hours for growing metal-ion-doped zinc sulfide nanoparticles in the mixed solution. The metal ion in the metal-ion-doped zinc sulfide nanoparticle is still used as a luminous center of a red light.

After, the grown metal-ion-doped zinc sulfide nanoparticles are collected. And then, a heat treatment is performed to the metal-ion-doped zinc sulfide nanoparticles at 100°C to 500°C for 30 minutes to 3 hours for removing the solvent from the metal-ion-doped zinc sulfide nanoparticles (step 106). Next, the metal-ion-doped zinc sulfide nanoparticles are ground by manually grinding, ball grinding machine, or other grinding device. Therefore, the sizes or diameters of the metal-ion-doped zinc sulfide nanoparticles are uniform. It means that all of the metal-ion-doped zinc sulfide nanoparticles can have the same sizes or diameters through grinding.

In the metal-ion-doped zinc sulfide nanoparticles, the metal ions capable of be used as a luminous center of a red light are used as luminous centers of red light by electronic transitions of these metal ions. For example electronic transition 4T1->6A1 of a manganese ion can be used as a luminous center of a red light by electronic transition 4T1->6A1 and manganese ion can emit a red light by electronic transition 4T1->6A1. The chemical agent containing zinc, the chemical agent containing a metal capable of being used as a luminous center of a red light, and the chemical agent containing sulfur are cheap, easy to be obtained, and environmentally friendly. In the method, these chemical agents (or materials), which are cheap, easy to be obtained, and environmentally friendly, are used to fabricate the metal-ion-doped zinc sulfide nanoparticles, and the process having advantages of simple process, simple processing conditions (or requirements) and low cost is applied to form the metal-ion-doped zinc sulfide nanoparticles which can be excited to emit a red light by a UV light. Like a conventional red phosphor, the metal-ion-doped zinc sulfide nanoparticles facbricated by this method also can be excited to emit a red light by a UV light. Therefore, in this method, it has no need of the rare earth elements, which are expensive, difficult to be obtained, and environmentally unfriendly, and the convention solid-state sintering having a need of high cost, long processing time, and high temperature. Therefore, the cost of fabricating the red phosphor can be decreased and the process for fabricating the red phosphor can be simplified.

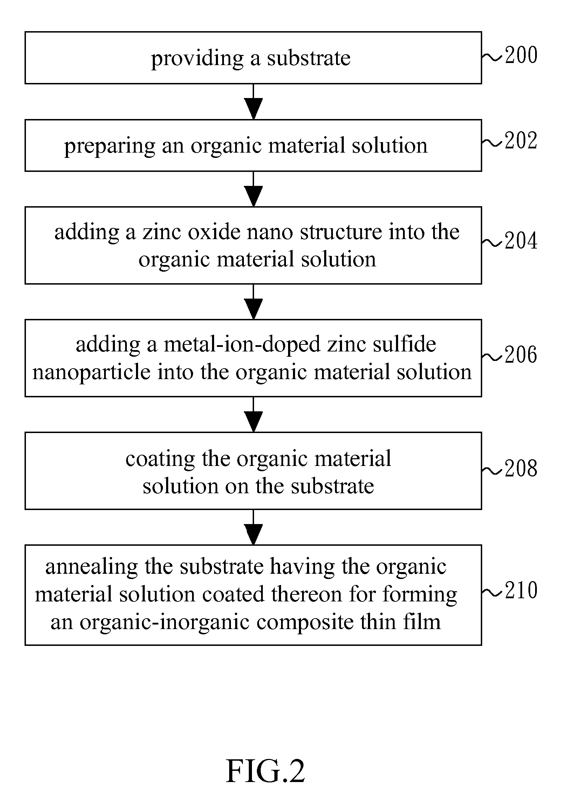

FIG. 2 is a flowchart illustrating a method for fabricating a warm white light emission phosphor film in accordance with another embodiment of the present invention. Referring to FIG. 2, first, a substrate is provided (step 200). The substrate is a glass substrate, an epoxy substrate, a quartz substrate, a PET substrate, or a substrate made of other materials. After, the substrate is washed respectively by deionized water, acetone, methanol, ispropanol, and an ultrasonic vibrator (or cleaner), and then, the substrate is dried by blowing with a nitrogen spray gun. After, a UV-Ozone treatment is performed to the substrate for removing the organic materials on the substrate.

After, an organic material is dissolved in an organic solvent for preparing an organic material solution (step 202). The organic material is a blue light organic material such as poly(9,9-DI-N-hexylfluorenyl-2,7-diyl)(PF), Alq2, Aromatic oligomer containing pyramidine, Fluorene Oligomers, Aromatic oligomer containing furan, distearyl allylene (DSA), stilbenes, coumarins, or other material which can be excited to emit a blue light by a UV light. The organic solvent is toluene, chloroform, oxylene, or other solvents which can dissolve the organic material.

Next, a zinc oxide nano structure (or zinc oxide nano structures) is added into the organic material solution (step 204). The zinc oxide nano structure is a zinc oxide nanoparticle, a zinc oxide nanoisland, a zinc oxide nanorod, a zinc oxide nanoline, a zinc oxide nanotube, or a zinc oxide nano-porous structure. The size of the zinc oxide nano structure is 1 nm to 2000 nm. After the zinc oxide nano structure (or zinc oxide nano structures) is uniformly distributed in the organic material solution, a metal-ion-doped zinc sulfide nanoparticle (or metal-ion-doped zinc sulfide nanoparticles) is added into the organic material solution (step 206). The metal ion(s) of the metal-ion-doped zinc sulfide nanoparticle (or metal-ion-doped zinc sulfide nanoparticles) can be used as a luminous center of a red light. And then, the (blue light) organic material, the zinc oxide nano structure(s), and the metal-ion-doped zinc sulfide nanoparticle(s) are mixed with each other uniformly in the organic material solution by stirring or shaking with an ultrasonic vibrator (or cleaner). It means that the organic material (the blue light organic material), the inorganic material (the zinc oxide nano structure(s)), and the metal-ion-doped zinc sulfide nanoparticle(s) dissolved in the organic material solution are mixed with each other uniformly. The size of the metal-ion-doped zinc sulfide nanoparticle(s) is 1 nm to 3000 nm. The metal ion of the metal-ion-doped zinc sulfide nanoparticle is a manganese ion, iron ion, cobalt ion, or copper ion. The metal ion of the metal-ion-doped zinc sulfide nanoparticle is preferably a manganese ion. Mole ratio of the metal ion and the zinc ion in the first solution is 0.01% to 30%. The metal-ion-doped zinc sulfide nanoparticle can be fabricated by the method for fabricating metal-ion-doped zinc sulfide nanoparticle illustrated in FIG. 1. The method illustrated in FIG. 1 is detailed above so it is not mentioned herein again. Or, in the step 206, the metal-ion-doped zinc sulfide nanoparticle(s) can be fabricated or prepared by hydrothermal method, solid-state recation, spin coating, dip coating, electrochemical method, precipitation in liquid phase, thermal evaporation, chemical vapor deposition, molecular beam epitaxy, metal-organic chemical vapor deposition (MOCVD), or pulsed laser deposition (PLD).

After the step 206, the organic material solution has the (blue light) organic material, the zinc oxide nano structure(s), and the metal-ion-doped zinc sulfide nanoparticle(s) uniformly mixed with each other therein. The weight concentration of the metal-ion-doped zinc sulfide nanoparticle in the organic material solution is 1% to 90% and it is preferably 1% to 30%. The weight concentration of the metal-ion-doped zinc sulfide nanoparticle in the organic material solution is calculated by multiplying the quotient of the weight of the metal-ion-doped zinc sulfide nanoparticle/the weight of the organic material solution by 100%. The weight concentration of the (blue light) organic material in the organic material solution is 0.01% to 10%. The weight concentration of the (blue light) organic material in the organic material solution is calculated by multiplying the quotient of the weight of the (blue light) organic material/the weight of the organic material solution by 100%. The weight concentration of the zinc oxide nano structure in the organic material solution is 0.01% to 20%. The weight concentration of the zinc oxide nano structure in the organic material solution is calculated by multiplying the quotient of the weight of the zinc oxide nano structure/the weight of the organic material solution by 100%.

Next, the organic material solution having the (blue light) organic material, the zinc oxide nano structure(s), and the metal-ion-doped zinc sulfide nanoparticle(s) uniformly mixed with each other therein is coated on the substrate (step 208). In the step 208, the organic material solution is coated on the substrate by spin coating, dip coating, ink printing, thermal evaporation, sputtering, spray coating, or roll-to-roll.

And then, the substrate having the organic material solution coated thereon (or the organic material solution coated the substrate) is annealed for forming an organic-inorganic composite thin film wherein the organic-inorganic composite thin film is used as a warm white light emission phosphor film (step 210). In the step 210, the substrate having the organic material solution coated thereon (or the organic material solution coated the substrate) is annealed at 70°C to 300°C for 30 minutes to 3 hours for forming the warm white light emission phosphor film on the substrate. The thickness of the warm white light emission phosphor film is 10 nm to 200 *µ*m.

The warm white light emission phosphor film is the organic-inorganic composite thin film made of the (blue light) organic material, the zinc oxide nano structure(s), and the metal-ion-doped zinc sulfide nanoparticle(s). The warm white light emission phosphor film is excited to simultaneously generate or emit a blue light, a green light, and a red light by illumination of a UV light, and the blue light, the green light, and the red light emitted from warm white light emission phosphor film will mix with each other for generating a white light. The red light is generated or emitted by the metal ion(s) of the metal-ion-doped zinc sulfide nanoparticle(s), such manganese ion(s), iron ion(s), cobalt ion(s), copper ion(s), or other metal ion(s) which can be used as a luminous center of a red light. The metal ion(s) becomes a luminous center of a red light by electronic transition of the metal ion(s) wherein the electronic transition is excited or caused by the UV light, and the red light is generated by the electronic transition. The metal ion of the metal-ion-doped zinc sulfide nanoparticle can emit the red light having an emission peak of 620 nm, and the red light emitted from the metal-ion-doped zinc sulfide nanoparticle is closer to the visible red light than the red light emitted by a conventional red phosphor. Therefore, the metal-ion-doped zinc sulfide nanoparticle is more suitable for being used as a red light material than the conventional red phosphor. The green light is generated by recombination of electrons at interfacial defects which are formed by the (blue light) organic material and the zinc oxide nano structure. The energy level of the interfacial defects can emit a green light having an emission peak of 532 nm. The blue light is generated by exciting of the (blue light) organic material through a UV light. The white light emitted from the warm white light emission phosphor film has the advantages of high color rendering index (CRI), low color temperature, being suitable for illumination, being unhurtful to human body because the white light is formed by mixing the blue light, the green light, and the red light. It means that the white light emitted from the warm white light emission phosphor film is a warm white light having high color rendering index (CRI) and low color temperature.

The white light emitted from the warm white light emission phosphor film is formed by mixing the blue light, the green light, and the red light. The blue light, the green light, and the red light are generated by the (blue light) organic material, the interfacial defects which are formed by the (blue light) organic material and the zinc oxide nano structure, and the metal ion(s) of the metal-ion-doped zinc sulfide nanoparticle(s) respectively. Therefore, the ratio of the blue light, the green light, and the red light in the (warm) white light can be adjusted or changed by adjusting or changing the ratio of the (blue light) organic material, the zinc oxide nano structure(s), and the metal-ion-doped zinc sulfide nanoparticle(s) in the warm white light emission phosphor film. By this way, the color temperature and the color coordinate of the white light emitted from the warm white light emission phosphor film can be controlled and adjusted. In other words, by adjusting or changing the concentration ratio of the (blue light) organic material, the zinc oxide nano structure, and the metal-ion-doped zinc sulfide nanoparticle in the organic material solution in the step 208, the ratio of the blue light, the green light, and the red light in the (warm) white light white light emitted from the warm white light emission phosphor film can be controlled and adjusted, and further the color temperature and the color coordinate of the white light emitted from the warm white light emission phosphor film can be controlled and adjusted, too. Further, the intensity of the green light can be adjusted or changed by adjusting or changing the annealing temperature because the annealing temperature affects the number of the interfacial defects which are formed by the (blue light) organic material and the zinc oxide nano structure. Therefore, the intensity of the green light can be controlled by changing or adjusting the annealing temperature, and further the color temperature and the color coordinate of the white light emitted from the warm white light emission phosphor film can be controlled and adjusted by controlling, adjusting, or changing the intensity of the green light in the white light emitted from the warm white light emission phosphor film. In other words, by controlling, adjusting, or changing the annealing temperature in step 210, the number of the interfacial defects which are formed by the (blue light) organic material and the zinc oxide nano structure can be adjusted or controlled, and further the intensity of the green light in the white light emitted from the warm white light emission phosphor film can be adjusted or controlled, too. By this way, the color temperature and the color coordinate of the white light emitted from the warm white light emission phosphor film can be controlled and adjusted.

In the method for fabricating a warm white light emission phosphor of the present invention, a blue light organic material, zinc oxide nano structure, and metal-ion-doped zinc sulfide nanoparticles, which are cheap, easy to be obtained, and environmentally friendly, are used to fabricate the organic-inorganic composite thin film with the process having advantages of simple process, simple processing conditions (or requirements) and low cost. Therefore, it has no need of the rare earth elements which are expensive, difficult to be obtained, and environmentally unfriendly. Furthermore, the cost of fabricating the warm white light emission phosphor film can be decreased and the process for fabricating the warm white light emission phosphor film (or the organic-inorganic composite thin film) can be simplified. When the organic-inorganic composite thin film is excited by a UV light, the organic-inorganic composite thin film will generate or emit a blue light, a green light, and a red light simultaneously, and the blue light, the green light, and the red light will be mixed together to form a warm white light which is suitable for (daily) illumination and has high color rendering index (CRI) and low color temperature. Therefore, the organic-inorganic composite thin film can be used as a warm white light emission phosphor film. Further, the color temperature and the color coordinate of the white light emitted from the warm white light emission phosphor film (or the organic-inorganic composite thin film) can be controlled and adjusted by adjusting or changing the ratio of the compositions of the warm white light emission phosphor film (or the organic-inorganic composite thin film) in this method (or in the step 208) or by adjusting or changing the annealing temperature in this method (or in the step 210).

Further, the present invention also providing a method for generating a warm white light. FIG. 2 is also a flowchart illustrating a method for generating a warm white light in accordance with another embodiment of the present invention. First, the step 200 to the step 210 illustrated in FIG. 2 are performed to form an organic-inorganic composite thin film in which the (blue light) organic material, the zinc oxide nano structure(s), and the metal-ion-doped zinc sulfide nanoparticle(s) are mixed together. The organic-inorganic composite thin film is used as a warm white light emission phosphor film. The steps 200-210 are detailed above and they are not mentioned herein again. After the steps 200-210, a UV light source, such as a UV LED or other apparatus or device capable of emitting a UV light, is provided for providing a UV light to illuminate the warm white light emission phosphor film. When the UV light illuminates the warm white light emission phosphor film, the warm white light emission phosphor film is excited to generate or emit a blue light, a green light, and a red light, and the blue light, the green light, the red light are mixed together to form a warm white light which is suitable for (daily) illumination and has high color rendering index (CRI) and low color temperature.

Like the method for fabricating a warm white light emission phosphor film illustrated in FIG. 2, the warm white light emission phosphor film used or fabricated in this method for generating a warm white light is made of the materials which are cheap, easy to be obtained, and environmentally friendly, and is formed by the process having advantages of simple process, simple processing conditions (or requirements) and low cost. Therefore, the method for generating a warm white light of the present invention is simple, cheap and environmentally friendly because this method utilizes the warm white light emission phosphor film fabricated by the steps 200-210 illustrating FIG. 2. Further, the white light generated or emitted by the warm white light emission phosphor film is a warm white light which is suitable for (daily) illumination and has high color rendering index (CRI) and low color temperature because the white light is formed by mixing the blue light, the green light, and the red light emitted from the warm white light emission phosphor film together.

Besides, in the method for generating a warm white light, the color temperature and the color coordinate of the white light generated by this method can be controlled and adjusted by adjusting or changing the ratio of the compositions of the warm white light emission phosphor film or by adjusting or changing the annealing temperature. In other words, in the method for generating a warm white light, the color temperature and the color coordinate of the white light generated by this method can be controlled and adjusted by adjusting or changing the concentration ratio of the (blue light) organic material, the zinc oxide nano structure, and the metal-ion-doped zinc sulfide nanoparticle in the organic material in the step 208 or by adjusting or changing the annealing temperature in the step 210.

For example, when the ratio of the metal-ion-doped zinc sulfide nanoparticle of the warm white light emission phosphor film is increased or the concentration ratio of the metal-ion-doped zinc sulfide nanoparticle in the organic material solution is increased, the intensity of the green light and the red light of the white light emitted from the warm white light emission phosphor film will be enhanced. Therefore, the green light and the red light dominate the warm white light emitted from the warm white light emission phosphor film. The ratio or the concentration of the metal-ion-doped zinc sulfide nanoparticle is larger, the warm white light generated by this method or the warm white light emission phosphor film deflects to red zone more and the color temperature of the warm white light is lower.

When the ratio of the zinc oxide nano structure of the warm white light emission phosphor film is increased or the concentration ratio of the zinc oxide nano structure in the organic material solution is increased, the intensity of the green light and the red light of the white light emitted from the warm white light emission phosphor film will also be enhanced. Therefore, the green light and the red light dominate the warm white light emitted from the warm white light emission phosphor film. The ratio or the concentration of the zinc oxide nano structure is larger, the warm white light generated by this method or the warm white light emission phosphor film deflects to red zone more and the color temperature of the warm white light is lower. On the contrary, when the ratio of the (blue light) organic material of the warm white light emission phosphor film is increased or the concentration ratio of the (blue light) organic material in the organic material solution is increased, the intensity of the blue light of the white light emitted from the warm white light emission phosphor film will be enhanced. Therefore, the blue light dominates the warm white light emitted from the warm white light emission phosphor film. The ratio or the concentration of the (blue light) organic material is larger, the warm white light generated by this method or the warm white light emission phosphor film deflects to blue zone more and the color temperature of the warm white light is higher.

When the annealing temperature is risen, the number of the interfacial defects which are formed by the (blue light) organic material and the zinc oxide nano structure will be increased. Therefore, the intensity of the green light of the white light emitted from the warm white light emission phosphor film is enhanced and the green light and the red light dominate the warm white light emitted from the warm white light emission phosphor film. The the annealing temperature is higher, the warm white light generated by this method or the warm white light emission phosphor film deflects to red zone more and the color temperature of the warm white light is lower.

According to foregoing embodiments, the present invention provides a method for fabricating metal-ion-doped zinc sulfide nanoparticle, a method for fabricating a warm white light emission phosphor film, and a method for generating a warm white light. In these methods, material, which is cheap, easy to be obtained, and environmentally friendly, is used to form the metal-ion-doped zinc sulfide nanoparticle, and the process having advantages of simple process, simple processing conditions (or requirements) and low cost is applied to form the metal-ion-doped zinc sulfide nanoparticle. The metal-ion-doped zinc sulfide nanoparticle can be excited to emit a red light. The metal-ion-doped zinc sulfide nanoparticle is used instead of the conventional red phosphor which is made of the rare earth elements and formed by the convention solid-state sintering having a need of high cost, long processing time, and high temperature. Therefore, the cost of fabricating the red phosphor can be decreased and the process for fabricating the red phosphor can be simplified. Furthermore, the metal-ion-doped zinc sulfide nanoparticle, a blue light organic material, and a zinc oxide nano structure are used to fabricate an organic-inorganic composite thin film. This organic-inorganic composite thin film is used as a warm white light emission phosphor film. Furthermore, by illumination of a UV light, the warm white light emission phosphor film can be excited to simultaneously generate or emit a blue light, a green light, and a red light, and a warm white light, which is suitable for daily illumination, unhurtful to human body, and has a good color rendering index (CRI) and a low color temperature, is formed by mixing the blue light, the green light, and the red light together. Besides, the color temperature and color rendering index (CRI) of the white light can be controlled by this method and the warm white light emission phosphor film.

## Claims

1. A method for fabricating metal-ion-doped zinc sulfide, comprising:
(1) preparing a first solution containing a zinc ion and a metal ion capable of being used as a luminous center of a red light;
(2) preparing a second solution containing a sulfur ion;
(3) mixing the first solution with the second solution uniformly to prepare a mixed solution and growing a metal-ion-doped zinc sulfide nanoparticle in the mixed solution; and
(4) performing a heat treatment to the metal-ion-doped zinc sulfide nanoparticle for removing solvent from the metal-ion-doped zinc sulfide nanoparticle.

2. The method of claim 1, wherein in the step (1), zinc nitride, zinc acetate, zinc chloride, or a chemical agent capable of dissociating zinc ions by dissolution is dissolved in a solvent to be used as a zinc ion source of the first solution.

3. The method of claim 2, wherein the metal ion is a manganese ion, iron ion, cobalt ion, or copper ion.

4. The method of claim 2, wherein the metal ion is a manganese ion, and in the step (1), manganese nitride, manganese acetate, manganese chloride, or a chemical agent capable of dissociating manganese ions by dissolution is dissolved in a solvent to be used as a manganese ion source of the first solution.

5. The method of claim 1, wherein in the step (2), sodium sulfide, thiourea, dimethyl sulfoxide, or a chemical agent capable of dissociating sulfur ions by dissolution is dissolved in a solvent to be used as a sulfur ion source of the second solution.

6. The method of claim 1, wherein in the step (3), the metal-ion-doped zinc sulfide nanoparticle is grown in the mixed solution at 15°C to 200°C for 20 minutes to 48 hours.

7. The method of claim 1, wherein in the step (4), the heat treatment is performed to the metal-ion-doped zinc sulfide nanoparticle at 100°C to 500 °C for 30 minutes to 3 hours.

8. The method of claim 1, wherein mole ratio of the metal ion and the zinc ion in the first solution is 0.01 % to 30%.

9. A method for generating a warm white light, comprising:
(1) providing a substrate;
(2) preparing an organic material solution;
(3) adding a zinc oxide nano structure into the organic material solution;
(4) adding a metal-ion-doped zinc sulfide nanoparticle into the organic material solution;
(5) coating the organic material solution on the substrate; and
(6) annealing the substrate having the organic material solution coated thereon for forming an organic-inorganic composite thin film wherein the organic-inorganic composite thin film is used as a warm white light emission phosphor film.

10. The method of claim 9, wherein the zinc oxide nano structure is a zinc oxide nanoparticle, a zinc oxide nanoisland, a zinc oxide nanorod, a zinc oxide nanoline, a zinc oxide nanotube, or a zinc oxide nano-porous structure, and size of the zinc oxide nano structure is 1 nm to 2000 nm.

11. The method of claim 9, wherein size of the metal-ion-doped zinc sulfide nanoparticle is 1 nm to 3000 nm.

12. The method of claim 9, wherein the metal ion of the metal-ion-doped zinc sulfide nanoparticle is a metal ion capable of being used as a luminous center of a red light.

13. The method of claim 9, wherein the metal-ion-doped zinc sulfide nanoparticle is prepared by hydrothermal method, solid-state recation, spin coating, dip coating, electrochemical method, precipitation in liquid phase, thermal evaporation, chemical vapor deposition, molecular beam epitaxy, metal-organic chemical vapor deposition (MOCVD), or pulsed laser deposition (PLD).

14. The method of claim 9, wherein thickness of the warm white light emission phosphor film is 10 nm to 200 *µ*m.

15. The method of claim 9, further comprising a step of providing a UV source for providing a UV light to illuminate the warm white light emission phosphor film and to excite the warm white light emission phosphor film to emit a warm light, and color temperature and color coordinate of the warm light are changed or adjusted by change the weight concentration of the metal-ion-doped zinc sulfide nanoparticle in the organic material solution or by the temperature performed in the step (6).
